Europäisches Patentamt

European Patent Office

Office européen des brevets

(11) Veröffentlichungsnummer: **0 177 019 B1**

(12) **EUROPÄISCHE PATENTSCHRIFT**

(45) Veröffentlichungstag der Patentschrift: **13.05.92**

(21) Anmeldenummer: **85112422.2**

(22) Anmeldetag: **01.10.85**

(51) Int. Cl.⁵: **H04B 3/46**, H04L 1/08, H04Q 9/00, G08C 25/00, H04L 12/26

(54) **Datenübermittlungseinrichtung, die ein Datennetz mit Baumstruktur aufweist.**

(30) Priorität: **04.10.84 DE 3436441**

(43) Veröffentlichungstag der Anmeldung:
**09.04.86 Patentblatt 86/15**

(45) Bekanntmachung des Hinweises auf die Patenterteilung:
**13.05.92 Patentblatt 92/20**

(84) Benannte Vertragsstaaten:
**AT BE CH DE FR GB IT LI NL SE**

(56) Entgegenhaltungen:
**EP-A- 0 046 937   EP-A- 0 177 018**
**DE-A- 2 823 836   DE-A- 2 827 418**
**DE-A- 3 110 590   US-A- 3 693 155**

(73) Patentinhaber: **SIEMENS AKTIENGESELL-SCHAFT**
**Wittelsbacherplatz 2**
**W-8000 München 2(DE)**

(72) Erfinder: **Herkert, Hans, Dipl.-Ing.**
**Kurzweg 3**
**W-8021 Hohenschäftlarn(DE)**

**Beschreibung**

Die Erfindung bezieht sich auf eine wie im Oberbegriff des Patentanspruchs 1 angegebene Datenübermittlungseinrichtung.

Eine derartige Einrichtung ist bereits aus der DE-A-31 10 590 bekannt. Das bekannte Verfahren steht im Zusammenhang mit einem Fernwirknetz mit Baumstruktur.

Ferner ist aus der DE-A- 30 32 619 bereits eine Fernwirkeinrichtung bekannt, deren Stationen hinsichtlich ihres Betriebszustandes überwacht werden. Die bekannte Fernwirkeinrichtung hat eine Zentralstation mit Unterstationen, d.h. zwei Ebenen.

Aufgabe der Erfindung ist es, eine Datenübermittlungseinrichtung der eingangs genannten Art so auszubilden, daß Betriebsstörungen im Datennetz oder in Stationen von einer Kopfstelle oder von einer Station einer gegenüber der Fehlerstelle höheren Ebene erkannt werden können. Insbesondere sollen Mißdeutungen empfangener Daten im Falle von Betriebsstörungen vermieden werden.

Gemäß der Erfindung wird die Datenübermittlungseinrichtung zur Lösung dieser Aufgabe in der im kennzeichnenden Teil des Anspruchs 1 angegebenen Weise ausgebildet. Durch diese Maßnahmen ergibt sich der Vorteil, daß die Statusmeldungen laufend, insbesondere periodisch, zusammen mit den zu übermittelnden Daten übertragen werden und zur Verfügung stehen und daß dies in einer Form geschieht, bei der bereits zur Datenübertragung benötigte Bestandteile der Datenübermittlungseinrichtung leicht mit verwendet werden können.

Vorteilhafte Ausgestaltungen der Datenübermittlungseinrichtung ergeben sich aus den Unteransprüchen.

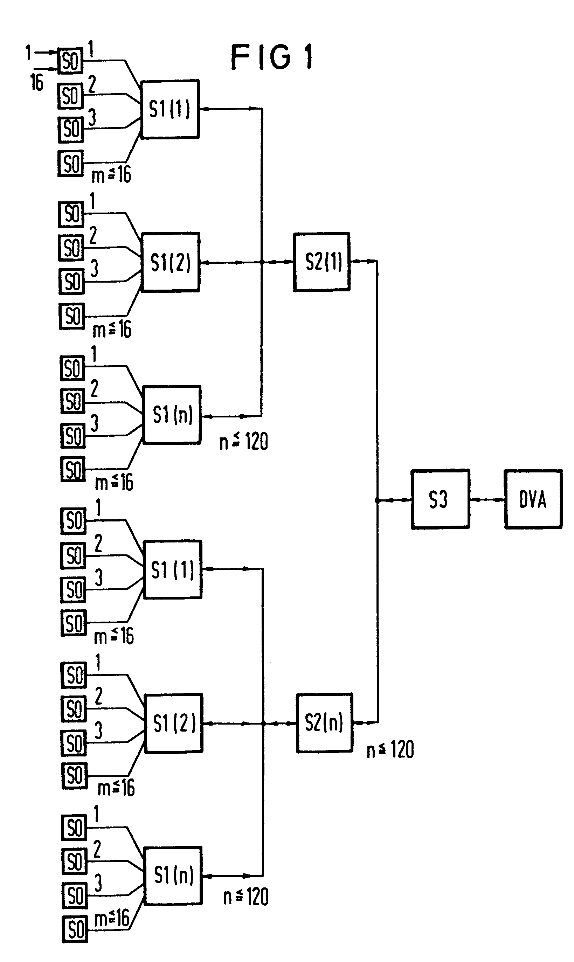

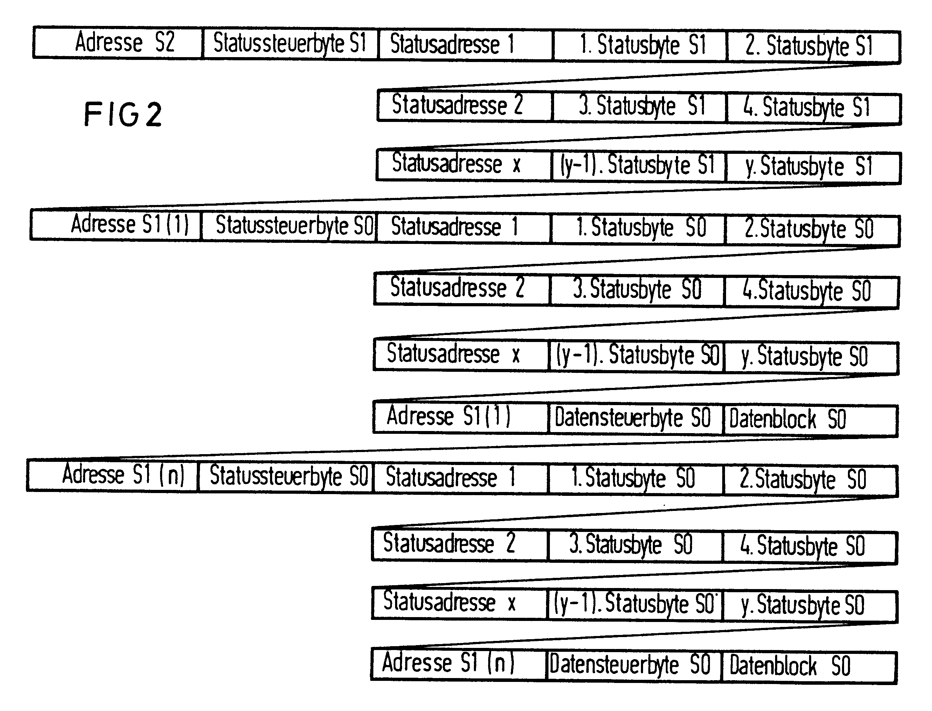

Die Erfindung wird anhand der in den Figuren 1 und 2 dargestellten Ausführungsbeispiele näher erläutert.

Es zeigen

Fig. 1    eine örtliche Signalerfassungseinrichtung mit einem Datennetz mit Baumstruktur und mit Stationen in mehreren Netzebenen,

Fig. 2    einen Datenblock einer Station der zweiten Netzebene mit zwei Datenblockteilen, von denen ein erster Statussignale enthält.

Fig. 1 zeigt eine Signalerfassungseinrichtung mit einem Datennetz von Baumstruktur. Die Stationen sind in mehrere Netzebenen angeordnet. An die Datenverarbeitungsanordnung DVA ist die Station S3 der dritten Netzebene angeschlossen. An die Stationen 53 sind die Stationen S2(1) bis S2(n) angeschlossen, von denen in der Figur nur die Stationen S2(1) und S2(n) gezeigt sind. Die Zahl der Stationen der zweiten Netzebene kann z.B. $n \leq 120$ sein.

An die Stationen S2(1) und S2(n) der zweiten Netzebene sind jeweils mehrere Stationen S1(1) bis S1(n) angeschlossen, von denen in der Figur jeweils nur die Stationen S1(1), S1(2) und S1(n) gezeigt sind. Die Zahl der Stationen der ersten Netzebene, die jeweils an eine Station der zweiten Netzebene angeschlossen sind, kann z.B. ebenfalls $n \leq 120$ sein.

Jede Station der ersten Netzebene hat Eingänge für Signalgeber, deren Zahl z.B. $m \leq 16$ beträgt. Jeder Signalgeber umfaßt z.B. 16 Ein-Bit-Signalquellen.

Bei dem Datennetz nach Fig. 1 sind die Stationen jeweils über Busleitungen, die vorzugsweise im Halbduplexbetrieb betrieben werden, verbunden. Am Stamm bzw. Kopf des Netzes befindet sich die Station S3, an den Ausläufern liegen die Signalgeber. Die Stationen der ersten und zweiten Netzebene befinden sich jeweils an einem Knoten des Datennetzes.

Die Signalgeber sind jeweils an einem eigenen Eingang der zugeordneten Station der ersten Netzebene angeschlossen. Die weiteren Stationen sind über Busleitungen miteinander verbunden.

Abweichend von der in Fig. 1 gezeigten Netzstruktur können gegebenenfalls anstelle der Busleitungen sternförmige Netzkonfigurationen treten.

Die in der Fig. 1 gezeigten Signalerfassungseinrichtungen erfassen Einzelsignale. Diese Einzelsignale geben insbesondere den Zustand von Geräten oder Gerätefunktionen einer hinsichtlich ihres Betriebszustandes überwachten Einrichtung oder Anlage an. Dies ist im beschriebenen Beispiel eine Endstelle einer Nachrichtenübertragungseinrichtung.

Die Stationen S2 der zweiten Netzebene überwachen den Betriebszustand der Stationen der ersten Netzebene. Dies kann beispielsweise durch ein Aufrufverfahren geschehen, bei dem jede aufgerufene Station antworten muß und eine fehlende Antwort als Betriebsstörung in der betreffenden Station oder als Fehlen der betreffenden Station gewertet wird.

Die somit in der Station der zweiten Netzebene vorhandenen Statussignale werden zusammen mit zu übermittelnden Daten in einem Datenblock an eine Station der dritten Netzebene übermittelt. Ein solcher Datenblock, der zusätzlich zu einem Datensignalfeld ein Statussignalfeld enthält, ist in Fig. 2 gezeigt. Im Anschluß an die Adresse S2 der sendenden Station folgen ein Statussignalfeld, das mehrere Statussignalbytes für die Zustände der Stationen der ersten Netzebene enthält. Hieran schließt sich ein weiterer Datenblockteil an, der sich aus den Datenblöcken zusammensetzt, die die Station S2 von den Stationen S1(1) ... S1(n) empfängt.

Man kann die Statussignale - abweichend von Fig. 2 - als solche mit Hilfe von Statusbytes übermitteln. Sei dem Datenblock nach Fig. 2 ist die Menge der von der Station zu übermittelnden Statussignale in eine Zahl von Untermengen aufgeteilt. Für jede Untermenge ist eine Untermengenadresse vorgesehen. Zur Datenreduktion werden in der Station diejenigen Untermengen unterdrückt, deren Informationsinhalt mit einem vorgegebenen Bezugsinhalt übereinstimmt. Die von der Station abgegebenen Datenblöcke enthalten im Anschluß an die Adresse der Station ein Datensteuersignal und die bei der Datenreduktion verbliebenen, jeweils durch ihre Adresse ergänzten Untermengen. Das Datensteuersignal enthält eine Information über die Zahl der auf das Datensteuersignal folgenden adressierten Untermengen. Dabei ist y = n/8.

Ist die erste Netzebene mit Stationen voll bestückt und arbeiten diese Stationen einwandfrei, so kann dies dadurch ausgedrückt werden, daß die Informationsbits der Statusbytes jeweils den Zustand log 0 haben. Ausgehend von der Erkenntnis, daß dieser Zustand mit einer besonderen Wahrscheinlichkeit auftritt, ist eine Datenreduktion vorgesehen, bei der als Bezugsinhalt der zu übertragenden Statusinformation ein Datenfeld dient, bei dem alle Bit die log 0 haben. Dieser Bezugsinhalt entspricht dem wahrscheinlichsten Zustand oder stellt einen Zustand dar, der dem wahrscheinlichsten Zustand in einfacher Weise nahekommt.

Auch die zu übertragenden Daten können ohne oder mit Datenreduktion übertragen werden. Nach Fig. 2 ist sowohl für die Statussignale als auch für die zu übertragenden Daten eine Datenreduktion vorgesehen.

Im Idealzustand herrscht störungsfreier Betrieb der mit der Datenübermittlungseinrichtung überwachten Anlage. In diesem Fall haben alle Signalquellen den Zustand log 0. Tritt an irgendeiner Stelle der überwachten Einrichtung ein Fehler auf, so wird dies durch eine log 1 gemeldet. Im allgemeinen werden keine oder nur sehr wenige Einzelsignale den Zustand log 1 annehmen. Als Bezugsinhalt der zu übertragenden Information dient daher ein Datenfeld, bei dem alle Bit die log 0 haben. Dieser Bezugsinhalt entspricht dem wahrscheinlichsten Zustand oder stellt einen Zustand dar, der dem wahrscheinlichsten Zustand in einfacher Weise nahekommt.

Die Datenblöcke, die von den untersten Knoten des in mehreren Ebenen aufgebauten Signalerfassungssystems bzw. von den Stationen der ersten Netzebene gesendet werden, bestehen aus einem Adressenfeld mit mehreren Bytes, einem Stammfeld bzw. Datensteuersignal mit mehreren Bytes und einem Informationsfeld mit sehr vielen Bytes. Die Bytes im Informationsfeld sind aus Untermengen zusammengesetzt, z.B. in 2 Bytes pro Untermenge. Jeder Untermenge wird eine Unteradresse in Form eines zusätzlichen Bytes gegeben. Die Unteradresse gibt jeweils an, wo der Alarmzustand liegt.

Die Daten und die Statussignale werden dadurch ohne eigentliche Vorverarbeitung reduziert, daß nur noch diejenigen Untermengen im Statusfeld oder Informationsfeld ausgesendet werden, die eine oder mehrere log 1 in ihren Status- bzw. Informationsbytes haben. Im Steuerbyte des betreffenden Steuerfeldes wird der Datensenke mitgeteilt, wieviel Untermengen folgen, die wenigstens eine log 1 haben.

Gegebenenfalls können Datenblöcke ohne Datenreduktion übertragen werden.

Der von einem Knoten bzw. von einer Station der dritten Netzebene ausgesendete Datenblock besteht nur aus einem Adressenfeld für die eigene Adresse , einem Steuerfeld, das angibt, wie viele Knoten bzw. Stationen der zweiten Ebene mit einem Sekundär-Datenblock vertreten sind und die Datenblöcke der Stationen der zweiten Ebene.

Nach Fig. 2 werden zwar für die Statussignale und für die zu übertragenden Daten jeweils zusätzlich Unteradressen übertragen. Da von den nach Fig. 2 vorgesehenen Untermengen nur solche Untermengen wirklich übertragen werden, die wenigstens eine log 1 enthalten, ergibt sich jedoch Datenreduktion.

Sind alle Signalsammler S1 und alle Signalgeber S0 vorhanden und keine Signale im Alarmzustand, so besteht der Datenblock nur aus drei Bytes, das sind 1,4 % des Datenblockes ohne Datenreduktion.

Die Signalsammler sind insbesondere Microcomputer. Beispielsweise sendet ein Signalsammler S1 960 Signale, das sind 120 Bytes, zum Signalsammler S2. An den Kopf fügt er seine eigene Adresse an. Der Signalsammler S1 sendet ständig in regelmäßigem Abstand oder auf Abfrage zum Signalsammler S2 die 120 Bytes. Dadurch ist der Signalsammler S2 immer über den neuesten Signalzustand informiert.

Bei den Signalsammlern S1 werden die 120 Bytes in Untermengen eingeteilt, z.B. zu je zwei Bytes. Jede Untermenge erhält ein Adreßbyte. Am Kopf des Datenblockes nach dem Adreßbyte des Computers folgt ein Steuerbyte, das die Anzahl der Untermengen angibt, in denen ein oder mehrere Bits die log 1 haben.

Hat im Computer kein Signal einen Alarmzustand, so haben auch alle Bits des Datenblockes die log 0. Der Computer braucht also nur seine eigene Adresse und ein Steuerbyte mit der binären Zahl 0 aussenden, um den ebenfalls durch einen Computer gebildeten Signalsammler S2 voll über den Zustand der Signale zu informieren.

Haben im Signalsammler S1 die Untermengen 10 und 23 irgendwelche Alarmzustände, so besteht der auszusendende Datenblock aus dem Adreßbyte des Signalsammlers S1, dem Steuerbyte mit der binären Zahl 2 und die beiden Untermengen mit den Adressen 10 und 23, also aus insgesamt 8 Bytes statt 121 Bytes. Damit ist der Signalsammler S2 voll über den Zustand der Signale in den 120 Bytes unterrichtet.

Haben jedoch alle Untermengen irgendwelche Alarmmeldungen, so verlängert sich der Datenblock infolge der Adreßbytes der Untermengen um 50 %. Dies sollte jedoch ein Ausnahmezustand sein. Aber auch hier kann eine Verbesserung dadurch erreicht werden, daß dem Signalsammler S2 über das Steuerbyte mitgeteilt wird, daß im folgenden Datenblock die Untermengen mit ihren Unteradressen aufgelöst sind und der Datenblock in normaler Reihenfolge der Bytes eintrifft.

Die Datenreduktion ohne Datenvorverarbeitung in den Knoten des Mehrebenen-Netzes geben diesem Netz einen wesentlichen Vorteil gegenüber dem Zweiebenennetz, da sie besonders bei großen Signalmengen die Änderung eines Signalzustandes schneller übertragen können. Ein Vierebenennetz überträgt eine Signaländerung etwa fünfmal so schnell wie ein Zweiebenennetz.

Die Bildung von Untermengen mit ihren Unteradressen geschieht in den Knoten eines Netzes automatisch, denn jeder Knoten verwaltet mehrere Unteradresen mit einer bestimmten Menge von Signalen und sendet diese Unteradressen mit seiner eigenen Adresse an der Spitze des Datenstromes an die nächst höhere Ebene. Dadurch läßt sich im Mehrebenennetz die Reduktion der Daten mit Hilfe von Steuerbytes besonders einfach durchführen.

Neben den Adressen mit ihren Datenbytes gibt es noch Statusadressen mit ihren Statusbytes. Die Datenbytes geben die Zustände der Signale an und die Statusbytes die Zustände der Stationen bzw. Knoten. Sie bilden die Eigenüberwachung der Datenübermittlungseinrichtung.

Bei dem Datenblock nach Fig. 2 sind die Untermengen jeweils durch ihre Adresse ergänzt und das Datensteuersignal enthält eine Information über die Zahl der auf das Datensteuersignal folgenden adressierten Untermengen. Eine ebenfalls zweckmäßige Alternativlösung besteht darin, daß das Datensteuersignal sowohl eine Information über die Zahl als auch über den Ort der folgenden Untermengen in einem Datenblock ohne Datenreduktion enthält und somit keine Untermengenadressen im Statusfeld erforderlich sind.

Die Fernwirk- oder Signalerfassungseinrichtung mit Baumstruktur und mehreren Ebenen ist mit einer Eigenüberwachung ausgestattet.

Ein Datenblock, den eine Station einer oberen Ebene des Mehrebenensystems aussendet, besteht aus der Adresse der Station der oberen Ebene, gefolgt von einer Adresse der nächst unteren Ebene und diese wieder gefolgt von einer Adresse der nächst unteren Ebene, bis schließlich die Adressen- und Informationsfelder der untersten Stufe mit den Meldungen der Signalzustände folgen.

Zur Eigenüberwachung des Mehrebenensystems werden eine bestimmte Auswahl von Bytes zwischen den Adreßbytes der verschiedenen Ebenen eingeschoben. Diese Bytes beinhalten die Zustände der Stationen bzw. Knoten des Datennetzes, die der betreffenden Station zugeordnet sind und deren Informationen auf die Adresse folgen.

Verwaltet die Station einer Ebene mehr als 16 Knoten der nächsten unteren Ebene, benötigt er also mehr als zwei Statusbytes für die Darstellung des Zustandes seiner Stationen bzw. Knoten, so ist es vorteilhaft, Untermengen zu bilden und mit Unteradressen zu versehen. Ein Steuerdatenbyte gibt dann an, wie viele Statusunteradressen folgen. Besonders vorteilhaft ist es, nur die Untermengen auszusenden, die eine Meldung über einen Stations- bzw. Knotenausfall enthalten. Die Statusadresse kann gleich sein einer Knoten- oder Informationsadresse, da der Charakter einer Adresse aus der Reihenfolge im Datenblock erkennbar ist.

**Patentansprüche**

1. Datenübermittlungseinrichtung, die ein Datennetz mit Baumstruktur aufweist und bei der wenigstens eine Station einer Netzebene über einen Datenübertragungskanal mit einer Station einer höheren Netzebene verbunden ist und über das Datennetz wenigstens in einer Übertragungsrichtung Datenblöcke mit zu übermittelnden Daten übertragen werden, wobei die Station als überwachende Station ausgebildet ist, die eine Vorrichtung zur Überwachung des Betriebszustandes der angeschlossenen Stationen der nächst niedrigeren Netzebene enthält, **dadurch gekennzeichnet,** daß die von der überwachenden Station an die zugeordnete Station der nächsthöheren Netzebene ausgesendeten Datenblöcke im Anschluß an die Adresse der betreffenden Station zwei Datenblockteile enthalten, von denen der eine ein Statussignalfeld mit wenigstens einem Statussignalbyte und der andere von Datengebern zur Übermittlung übernommene Daten enthält.

**2.** Datenübermittlungseinrichtung nach Anspruch 1, **dadurch gekennzeichnet,** daß die Menge der von der Station zu übermittelnden Statussignale eine vorgegebene Zahl von Untermengen enthält und daß zur Datenreduktion in der Station diejenigen Untermengen unterdrückt werden, deren Informationsinhalt mit einem vorgegebenen Bezugsinhalt übereinstimmt.

**3.** Datenübermittlungseinrichtung nach Anspruch 2, **dadurch gekennzeichnet,** daß ein den Sstatussignalen vorangestelltes Datensteuersignal und/oder den Untermengen beigefügte Untermengenadressen Informationen über die Zahl und Zuordnung der auf das Steuersignal folgenden Untermengen enthält.

**4.** Datenübermittlungseinrichtung nach einem der Ansprüche 1 bis 3, **dadurch gekennzeichnet,** daß bei einem Datennetz mit Baumstruktur, bei dem Stationen einer ersten Netzebene jeweils an mehrere Datengeber angeschlossen sind und bei dem mindestens eine höhere Netzebene mit wenigstens einer weiteren Station vorgesehen ist, von den Stationen der höheren Netzebene ausgesendete Datenblöcke jeweils die Adresse der sendenden Station, ein Statussteuersignal mit zugehörigem Statusdatenblock, der auf die Ebene der von der Station unmittelbar überwachten Stationen bezogen ist, und eine folge der aneinandergereihten Datenblöcke der Stationen der nächst niedrigeren Netzebene enthält.

**5.** Datenübermittlungseinrichtung nach einem der vorhergehenden Ansprüche, **dadurch gekennzeichnet,** eine Verwendung der Datenübermittlungseinrichtung zur örtlichen Erfassung von Fehlermeldungen in einer Einrichtung zur zentralen Betriebsbeobachtung von Nachrichtenübertragungseinrichtungen.

**Claims**

**1.** Data transmission arrangement which comprises a tree-structured data network and in which at least one station of one network level is connected via a data transmission channel to a station of a higher network level and data blocks with data to be transmitted are transmitted at least in one transmission direction via the data network, the station being constructed as a monitoring station which contains a device for monitoring the operating status of the connected stations of the next lower network level, characterised in that the data blocks sent out by the monitoring station to the associated station of the next higher network level contain, following the address of the relevant station, two data block sections, one of which contains a status signal field with at least one status signal byte and the other one of which contains data accepted for transmission by data transmitters.

**2.** Data transmission arrangement according to Claim 1, characterised in that the set of status signals to be transmitted by the station contains a predetermined number of subsets and that, for the purpose of data reduction, those subsets whose information content coincides with a predetermined reference content are suppressed in the station.

**3.** Data transmission arrangement according to Claim 2, characterised in that a data control signal preceding the status signals and/or subset addresses attached to the subsets contain information items on the number and correlation of the subsets following the control signal.

**4.** Data transmission arrangement according to one of Claims 1 to 3, characterised in that in a tree-structured data network in which stations of a first network level are in each case connected to a plurality of data transmitters and in which at least one higher network level is provided with at least one further station, data blocks sent out by the stations of the higher network level in each case contain the address of the transmitting station, a status control signal with associated status data block which is referred to the level of the stations directly monitored by the station, and a sequence of the concatenated data blocks of the stations of the next lower network level.

**5.** Data transmission arrangement according to one of the preceding claims, characterised by the data transmission arrangement being used for locally detecting error messages in an arrangement for centralised service observation of telecommunication arrangements.

**Revendications**

**1.** Dispositif de transmission de données, qui comporte un réseau de données possédant une structure arborescente et dans lequel au moins un poste d'un plan du réseau est raccordé par l'intermédiaire d'un canal de transmission de données à un poste d'un plan supérieur du réseau, et des blocs de données comportant des données devant être transmises sont transmis par l'intermédiaire du réseau de données au moins dans un sens de transmission, et dans lequel le poste est agencé sous la forme d'un poste effectuant un contrôle et qui contient un dispositif pour contrôler l'état de fonctionnement des postes raccordés du plan immédiatement inférieur du réseau, caractérisé par le fait

que les blocs de données, émis par le poste effectuant le contrôle en direction du poste associé du plan immédiatement supérieur du réseau, contiennent, à la suite de l'adresse du poste considéré, deux parties, dont l'une contient une zone de signaux d'état comportant au moins un octet de signaux d'état et dont l'autre contient des données transférées par des générateurs de données en vue de leur transmission.

2. Dispositif de transmission de données suivant la revendication 1, caractérisé par le fait que la quantité des signaux d'état devant être transmis par le poste contient un nombre prédéterminé de quantités partielles et que pour la réduction des données dans le poste, les quantités partielles, dont le contenu en informations coïncide avec un contenu prédéterminé de référence, sont supprimées.

3. Dispositif de transmission de données suivant la revendication 2, caractérisé par le fait qu'un signal de commande de données qui précède les signaux d'état, et/ou des adresses de quantités partielles, adjointes à ces quantités partielles, contiennent des informations concernant le nombre et l'association des quantités partielles qui sont situées en aval du signal de commande.

4. Dispositif de transmission de données suivant l'une des revendications 1 à 3, caractérisé par le fait que dans le cas d'un réseau de données possédant une structure arborescente, dans lequel des postes d'un premier plan du réseau sont raccordés respectivement à plusieurs générateurs de données et dans lequel il est prévu au moins un plan supérieur du réseau comportant au moins un autre poste, des blocs de données émis par les postes du plan supérieur du réseau contiennent respectivement l'adresse du poste émetteur, un signal de commande d'état auquel est associé un bloc de données d'état, qui est rapporté au plan des postes directement contrôlés par ledit poste, et une suite des blocs de données successifs des postes immédiatement inférieurs du réseau.

5. Dispositif de transmission de données suivant l'une des revendications précédentes, caractérisé par une utilisation du dispositif de transmission de données pour la détection locale de signalisation d'erreurs dans un dispositif servant à réaliser une observation centrale du fonctionnement de dispositifs de transmission d'informations.

# FIG 1

EP 0 177 019 B1

**FIG 2**

| Adresse S2 | Statussteuerbyte S1 | Statusadresse 1 | 1. Statusbyte S1 | 2. Statusbyte S1 |

| Statusadresse 2 | 3. Statusbyte S1 | 4. Statusbyte S1 |

| Statusadresse x | (y-1). Statusbyte S1 | y. Statusbyte S1 |

| Adresse S1(1) | Statussteuerbyte S0 | Statusadresse 1 | 1. Statusbyte S0 | 2. Statusbyte S0 |

| Statusadresse 2 | 3. Statusbyte S0 | 4. Statusbyte S0 |

| Statusadresse x | (y-1). Statusbyte S0 | y. Statusbyte S0 |

| Adresse S1(1) | Datensteuerbyte S0 | Datenblock S0 |

| Adresse S1(n) | Statussteuerbyte S0 | Statusadresse 1 | 1. Statusbyte S0 | 2. Statusbyte S0 |

| Statusadresse 2 | 3. Statusbyte S0 | 4. Statusbyte S0 |

| Statusadresse x | (y-1). Statusbyte S0 | y. Statusbyte S0 |

| Adresse S1(n) | Datensteuerbyte S0 | Datenblock S0 |